# EUROPEAN PATENT APPLICATION

(11) **EP 1 179 899 A2**
(43) Date of publication of application: **13.02.2002**
(21) Application number: 01119142.6
(22) Date of filing: 08.08.2001
(51) Int. Cl.: H04B 10/00

(54) **Infrared communication unit guide**

(30) Priority: 10.08.2000 JP 2000242892
(71) Applicant: SHARP KABUSHIKI KAISHA, Osaka-shi, Osaka-fu 545-0013 (JP)
(72) Inventor: Fujiwara, Yasuhito, Higashihiroshima-Shi, Hiroshima (JP)
(74) Representative: Müller . Hoffmann & Partner Patentanwälte

(57) **Abstract**

An IR communication unit guide that permits an IR communication unit to be positioned so as to be connected to an IR port of an electronic device acting as a communication partner has a pair of guide members that can hold a cellular phone, a communication partner, by sandwiching it. One guide member has an opening formed therein, and has guide rails, serving as a positioning portion, formed thereon. The cellular phone is held by being sandwiched between the pair of guide members with the IR port of the cellular phone facing the opening of the guide member, and the IR communication unit is connected to the positioning portion of the guide member.

## Description

### BACKGROUND OF THE INVENTION

### Field of the Invention

The present invention relates to an IR (infrared) communication unit guide that permits an IR communication unit connected via a cable to one electronic device to be positioned so as to face and thereby be connected to an IR port provided in another electronic device, i.e. a communication partner.

### Description of the Prior Art

One conventional way to achieve transfer of data signals, for example, between a computer proper and one of its peripheral devices or terminal units is to adopt a wireless signal transfer technology using infrared rays. This wireless signal transfer technology has advantages such as easy data transfer achieved simply by placing devices involved close together, and disuse of many connection cables and the resulting elimination of the need for troublesome cable connection and the risk of erroneous connection. However, it also has disadvantages such as a rather narrow range of angles (about 30°) within which a light-emitting side and a light-receiving side need to be placed so as to face each other, and a rather short distance (about 1 m) over which data signals or the like can be transferred.

To overcome these inconveniences, signal transfer is often carried out by connecting an IR communication unit via a cable to one electronic device, and connecting the IR communication unit to an IR port provided in another electronic device, i.e. a communication partner, in such a way that the IR communication unit faces the IR port.

For example, Japanese Patent Application Laid-Open No. H10-240397 discloses an arrangement in which an IR communication unit that is connected via a cable to one electronic device is fitted with a magnet, and an IR port provided in another electronic device, i.e. a communication partner, has a magnetic material provided around it, so that the IR communication unit is connected to the IR port by magnetic force.

On the other hand, Japanese Patent Applications Laid-Open Nos. H10-22928 and H10-22929 disclose an arrangement in which, though not quite the same as an IR communication unit, an optical cable fitted with an IR input/output port at an end is connected to an IR port provided in an electronic device in such a way that the IR input/output port faces the IR port.

In the arrangement disclosed in Japanese Patent Application Laid-Open No. H10-240397 mentioned above, it is necessary to provide a magnetic material such as sheet metal on the part of the IR port to suit the magnet provided on the part of the IR communication unit. Not only does this make the electronic device incorporating the IR port heavier, but also the magnet used degrades data storage reliability in cases where the electronic device employs a magnetic medium such as a floppy disk.

In the arrangement disclosed in Japanese Patent Application Laid-Open No. H10-22928 mentioned above, it is possible to adjust the position of the IR input/output port provided at an end of the optical cable and the position of the IR port provided in the electronic device in the direction of height, but it is not possible to fix the IR input/output port to the electronic device. Therefore, if the IR input/output port and the IR port are displaced relative to each other, it is no longer possible to perform signal transfer.

In the arrangement disclosed in Japanese Patent Application Laid-Open No. H10-22929 mentioned above, the IR input/output port provided at an end of the optical cable is fixed to the electronic device by making the former, with a fixing mechanism provided thereon, pinch the latter from above and below in such a way that the IR input/output port faces the IR port provided in the electronic device. Here, the fixing mechanism may accidentally operate the operation portion, or conceal part of the display portion, provided on the top surface of the electronic device, and thus may degrade the operability of the electronic device during IR communication.

### SUMMARY OF THE INVENTION

An object of the present invention is to provide an IR communication unit guide that permits an IR communication unit connected via a cable to one electronic device to be positioned so as to be connected to an IR port provided in another electronic device, i.e. a communication partner, without degrading the operability of the communication partner.

To achieve the above object, according to one aspect of the present invention, an IR communication unit guide that permits an IR communication unit connected via a cable to a first electronic device to be positioned in such a way that an IR emitter/receiver portion of the IR communication unit faces and is thereby connected to an IR port provided in a surface of a second electronic device acting as a communication partner is provided with: a pair of first guide members that can hold the second electronic device by sandwiching it and of which one has an opening formed therein and has a positioning portion, for positioning the IR communication unit, formed thereon. Here, the second electronic device is held by being sandwiched between the pair of first guide members with the IR port of the second electronic device facing the opening of the aforementioned one of the first guide members, and the IR communication unit is connected to the positioning portion of the aforementioned one of the first guide members.

In this arrangement, the IR communication unit and the cellular phone, i.e. the communication partner, can be fixed independently to the IR communication unit guide, and in addition the IR emitter/receiver portion of the IR communication unit can be positioned so as to face the IR port provided in a surface of the cellular phone, i.e. the communication partner.

Here, the first guide members constituting the IR communication unit guide never accidentally operate the operation portion or conceal part of the display portion of the cellular phone. Thus, it is possible to perform signal transfer without degrading the operability of the cellular phone.

Here, the first guide members may each be composed of a bottom portion and a side portion pivotably fitted on the bottom portion so that, when the IR communication unit guide is not in use, the side portion is folded down onto the bottom portion. In this arrangement, when the IR communication unit guide is not used, by folding the side portions down onto the bottom portions, the IR communication unit guide 1 can be made compact so that it requires minimum space when carried around or stored away.

According to another aspect of the present invention, an IR communication unit guide that permits an IR communication unit connected via a cable to a first electronic device to be positioned in such a way that an IR emitter/receiver portion of the IR communication unit faces and is thereby connected to an IR port provided in a surface of a second electronic device acting as a communication partner is provided with: a pair of first guide members that can hold the second electronic device by sandwiching the second electronic device; and a second guide member that is slidable in the direction in which the pair of first members are slidable to sandwich the second electronic device and that has an opening formed therein and has a positioning portion, for positioning the IR communication unit, formed thereon. Here, the second electronic device is held by being sandwiched between the pair of first guide members with the IR port of the second electronic device facing the opening of the second guide member, and the IR communication unit is connected to the positioning portion of the second guide member.

In this arrangement, the IR communication unit and the cellular phone, i.e. the communication partner, can be fixed independently to the IR communication unit guide, and in addition the IR emitter/receiver portion of the IR communication unit can be positioned so as to face the IR port provided in a surface of the cellular phone, i.e. the communication partner.

Here, the first guide members and the second guide member constituting the IR communication unit guide never accidentally operate the operation portion or conceal part of the display portion of the cellular phone. Thus, it is possible to perform signal transfer without degrading the operability of the cellular phone.

According to another aspect of the present invention, an IR communication unit guide that permits an IR communication unit connected via a cable to a first electronic device to be positioned in such a way that an IR emitter/receiver portion of the IR communication unit faces and is thereby connected selectively to one of IR ports provided individually in two adjacent surfaces of a second electronic device acting as a communication partner is provided with: a pair of first guide members that can hold the second electronic device by sandwiching the second electronic device and of which one has an opening formed therein and has a positioning portion, for positioning the IR communication unit, formed thereon; and a second guide member that is slidable in the direction in which the pair of first members are slidable to sandwich the second electronic device and that has an opening formed therein and has a positioning portion, for positioning the IR communication unit, formed thereon. Here, the second electronic device is held by being sandwiched between the pair of first guide members with one of the IR ports of the second electronic device facing the opening of the aforementioned one of the first guide members or the opening of the second guide member, and the IR communication unit is connected selectively to the positioning portion of the aforementioned one of the first guide member or the positioning portion of the second guide member.

In this arrangement, the IR communication unit and the cellular phone, i.e. the communication partner, can be fixed independently to the IR communication unit guide, and in addition, even in a case where the cellular phone, i.e. the communication partner, has IR ports provided in two adjacent surfaces thereof, the IR emitter/receiver portion of the IR communication unit can be positioned so as to face selectively one of the IR ports of the cellular phone, i.e. the communication partner.

Here, the first guide members and the second guide member constituting the IR communication unit guide never accidentally operate the operation portion or conceal part of the display portion of the cellular phone. Thus, it is possible to perform signal transfer without degrading the operability of the cellular phone.

According to another aspect of the present invention, an IR communication unit guide that permits an IR communication unit connected via a cable to a first electronic device to be positioned in such a way that an IR emitter/receiver portion of the IR communication unit faces and is thereby connected to an IR port provided in a surface of a second electronic device acting as a communication partner is provided with: a guide member having an opening, whose size is equal to or larger than the IR port of the second electronic device, formed therein and having a positioning portion, for positioning the IR communication unit, formed thereon; and an adhesive cushion member bonded to the guide member. Here, the guide member is adhesion-attached, through the adhesive cushion member, to the second electronic device with the opening of the guide member facing the IR port of the second electronic device, and the IR communication unit is connected to the positioning portion of the guide member.

In this arrangement, by adhesion-attaching the IR communication unit guide to the cellular phone, i.e. the communication partner, and then fixing the IR communication unit to the IR communication unit guide, the IR communication unit can be fixed, through the IR communication unit guide, to the cellular phone, i.e. the communication partner, and in addition the IR emitter/receiver portion of the IR communication unit can be positioned so as to face the IR port provided in a surface of the cellular phone, i.e. the communication partner.

Here, the IR communication unit guide, simply adhesion-attached to a surface of the cellular phone in which the IR port is provided, never accidentally operates the operation portion or conceals part of the display portion of the cellular phone. Thus, it is possible to perform signal transfer without degrading the operability of the cellular phone.

### BRIEF DESCRIPTION OF THE DRAWINGS

This and other objects and features of the present invention will become clear from the following description, taken in conjunction with the preferred embodiments with reference to the accompanying drawings in which:
Fig. 1 is a perspective view of an IR communication unit guide of a first embodiment of the invention;
Fig. 2 is a view from the direction indicated by arrow A of the IR communication unit guide shown in Fig. I;
Fig. 3 is a view from the direction indicated by arrow B of the IR communication unit guide shown in Fig. 1;
Fig. 4 is a partially omitted perspective view showing one of the first guide members of the IR communication unit guide shown in Fig. 1 together with an IR communication unit;
Fig. 5 is a perspective view showing the state in which, using the IR communication unit guide shown in Fig. 1, the IR communication unit and a cellular phone, i.e. a communication partner, are positioned relative to each other so as to be connected together;
Fig. 6 is an exploded perspective view showing the relationship among the IR communication unit guide, IR communication unit, and cellular phone shown in Fig. 5;
Fig. 7 is a perspective view of a modified example of the IR communication unit guide of the first embodiment;
Fig. 8 is a front view of the IR communication unit guide shown in Fig. 7, with its side portions upright;
Fig. 9 is a front view of the IR communication unit guide shown in Fig. 7, with its side portions folded down;
Fig. 10 is a perspective view of the IR communication unit guide of a second embodiment of the invention;
Fig. 11 is a view from the direction indicated by arrow C of the IR communication unit guide shown in Fig. 10;
Fig. 12 is a view from the direction indicated by arrow D of the IR communication unit guide shown in Fig. 10;
Fig. 13 is a perspective view of the second guide member of the IR communication unit guide shown in Fig. 10;
Fig. 14 is a perspective view showing the state in which, using the IR communication unit guide shown in Fig. 10, the IR communication unit and a cellular phone, i.e. a communication partner, are positioned relative to each other so as to be connected together;
Fig. 15 is an exploded perspective view showing the relationship among the IR communication unit guide, IR communication unit, and cellular phone shown in Fig. 14;
Fig. 16 is a perspective view of the IR communication unit guide of a third embodiment of the invention;
Fig. 17 is a view from the direction indicated by arrow E of the IR communication unit guide shown in Fig. 16;
Fig. 18 is a view from the direction indicated by arrow F of the IR communication unit guide shown in Fig. 16;
Fig. 19 is a perspective view showing the state in which, using the IR communication unit guide shown in Fig. 16, the IR communication unit and a cellular phone, i.e. a communication partner, are positioned relative to each other so as to be connected and fixed together;
Fig. 20 is a perspective view showing the state in which, using the IR communication unit guide shown in Fig. 16, the IR communication unit and a cellular phone, i.e. a communication partner, are positioned relative to each other so as to be connected and fixed together;
Fig. 21 is an exploded perspective view showing the relationship among the IR communication unit guide, IR communication unit, and cellular phone shown in Figs. 19 and 20;
Fig. 22 is a perspective view showing the IR communication unit guide of a fourth embodiment of the invention together with an IR communication unit;
Fig. 23 is a perspective view showing the state in which, using the IR communication unit guide shown in Fig. 22, the IR communication unit and a cellular phone, i.e. a communication partner, are positioned relative to each other so as to be connected together;
Fig. 24 is an exploded perspective view showing the relationship among the IR communication unit guide, IR communication unit, and cellular phone shown in Fig. 23;
Fig. 25 is a perspective view showing the IR communication unit guide of a fifth embodiment of the invention together with an IR communication unit;
Fig. 26 is a perspective view showing the state in which, using the IR communication unit guide shown in Fig. 25, the IR communication unit and a cellular phone, i.e. a communication partner, are positioned relative to each other so as to be connected together; and
Fig. 27 is an exploded perspective view showing the relationship among the IR communication unit guide, IR communication unit, and cellular phone shown in Fig. 26.

### DESCRIPTION OF THE PREFERRED EMBODIMENTS

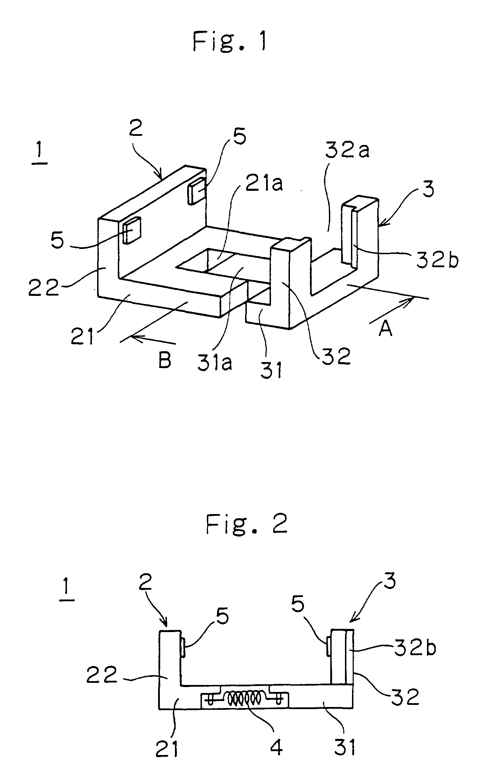

Hereinafter, embodiments of the present invention will be described with reference to the drawings. Figs. 1 to 4 show the IR communication unit guide 1 of a first embodiment of the invention.

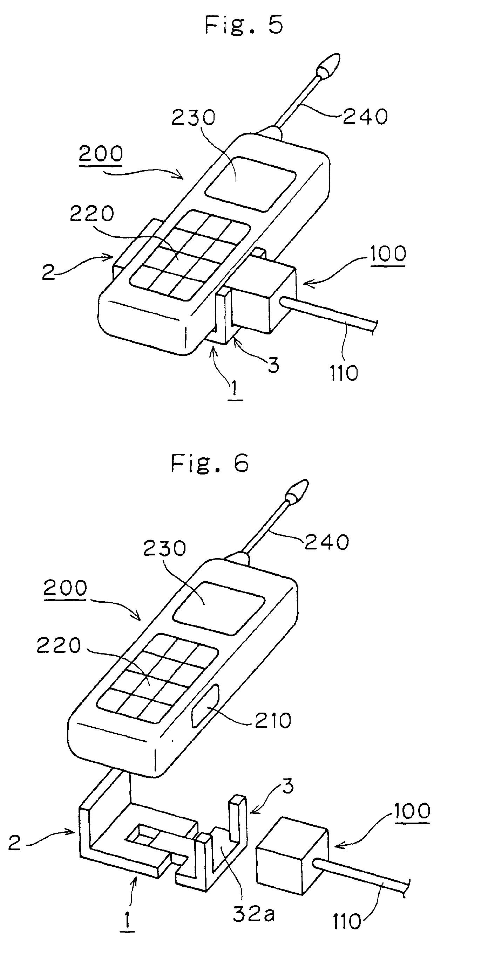

This IR communication unit guide 1 is used, as shown in Figs 5 and 6, to permit an IR communication unit 100 connected via a cable 110 to one electronic device (not shown) to be positioned so as to face and thereby be connected to an IR port 210 provided in another electronic device, i.e. a communication partner, such as a cellular phone 200. The IR communication unit guide 1 is composed of a pair of first guide members 2 and 3 that can hold the cellular phone 200 by sandwiching it on opposite side surfaces thereof, i.e. the side surface in which the IR port 210 is provided and the side surface opposite thereto.

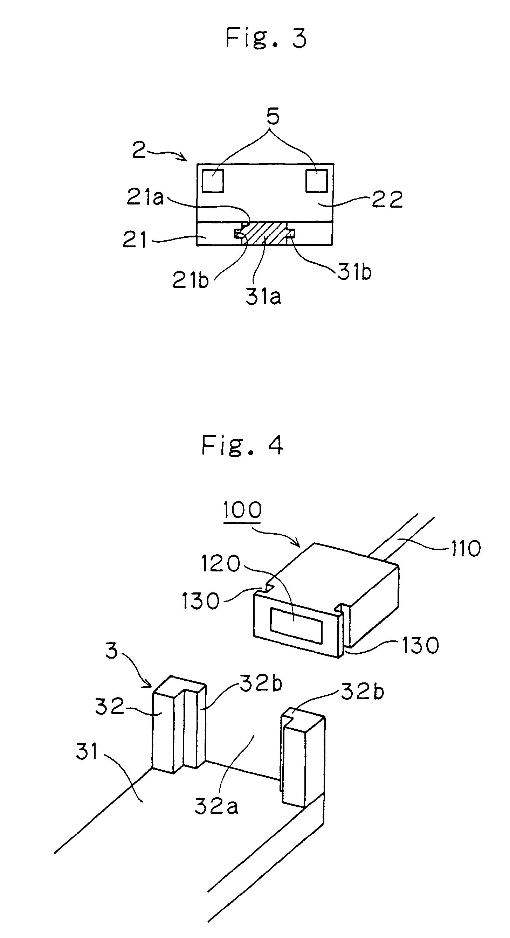

The IR communication unit 100 has an IR emitter/receiver portion 120 provided on the front surface thereof, and has slits 130 formed vertically in the left and right side surfaces, respectively, near the front surface (see Fig. 4).

The cellular phone 200, i.e. the communication partner, has an operation portion 220 and a display portion 230 formed on the top surface thereof, has an antenna portion 240 provided on the front surface thereof, and has the IR port 210 provided in one side surface thereof.

The first guide members 2 and 3 constituting the IR communication unit guide 1 are each composed of a bottom portion 21 or 31 and a side portion 22 or 32 that is formed so as to extend upward from the outer edge of the bottom portion 21 or 31. The first guide members 2 and 3 are loaded with a force that tends to bring their side portions 22 and 32 closer together.

Specifically, as shown in Fig. 3, in the bottom portion 21 of one first guide member 2, a rectangular cut 21a is formed, and, in opposite inner surfaces of this cut 21a, grooves 21b are formed. On the other hand, in the bottom portion 31 of the other first guide member 3, a rectangular projection 31a corresponding to the cut 21a is formed, and, on opposite outer surfaces of this projection 31a, threads 31b corresponding to the grooves 21b are formed. The projection 31a, having the threads 31b, of the bottom portion 31 slidably fits in the cut 21a, having the grooves 21b, of the bottom portion 21. Moreover, between the recessed surface of the cut 21a of the bottom portion 21 and the tip surface of the projection 31a of the bottom portion 31, an resilient member 4 (see Fig. 2) is provided. The resilient member 4 loads the first guide members 2 and 3 with a force that tends to bring their side portions 21 closer together, with the threads 31b of the projection 31a of the bottom portion 31 sliding along the grooves 21b of the cut 21a of the bottom portion 21.

The grooves 21b and the threads 31b are formed in such positions that the top surfaces of the bottom portions 21 and 31 form a continuous surface.

The side portion 22 of the first guide member 2 has the shape of a flat plate. By contrast, in the side portion 32 of the first guide member 3, an opening 32a is formed of which the size is equal to or greater than the IR emitter/receiver portion 120 of the IR communication unit 100, and, on opposite inner surfaces along this opening 32a, guide rails 32b are formed vertically that fit in the slits 130 formed in the IR communication unit 100 (see Fig. 4). The height of the opening 32a and the guide rails 32b is so determined that, when the cellular phone 200 is held between the first guide members 2 and 3, its IR port 210 faces the IR emitter/receiver portion 120 of the IR communication unit 100.

On opposite inner surfaces of the side portions 22 and 32, antislip rubber pads 5 are provided so that the cellular phone 200, i.e. the communication partner, is kept in position when held between the side portions 22 and 32 of the first guide members 2 and 3 under the force exerted by the resilient member 4.

Next, how, using this IR communication unit guide 1, the IR communication unit 100 and the cellular phone 200, i.e. the communication partner, are positioned relative to each other so as to be connected together so that signal transfer is possible will be described.

First, with the first guide member 2 held firmly, the first guide member 3 is pulled outward against the force exerted by the resilient member 4 so that their side portions 22 and 32 are held wider apart, and then the cellular phone 200 is placed between the side portions 22 and 32. Here, the position of the cellular phone 200 is so adjusted that the IR port 210 provided in one side surface thereof faces the opening 32a formed in the side portion 32 of the first guide member 3. That is, according to the position of the IR port 210 provided in the cellular phone 200, the position in which the cellular phone 200 is held between the side portions 22 and 32 is adjusted by moving it up and down and back and forth.

Then, the first guide members 2 and 3 are set free, so that, under the force exerted by the resilient member 4, the cellular phone 200 is, on the side surfaces thereof, held between the side portions 22 and 32 of the first guide members 2 and 3. Here, the antislip rubber pads 5 provided on the inner surfaces of the side portions 22 and 32 of the first guide members 2 and 3 come into close contact with the side surfaces of the cellular phone 200 so as to keep the cellular phone 200 in position.

Next, the slits 130 formed in the left and right side surfaces of the IR communication unit 100 are brought right above the guide rails 32b formed in the side portion 32 of the first guide member 3, and then the IR communication unit 100 is brought down so as to be set in the opening 32a so that the IR emitter/receiver portion 120 of the IR communication unit 100 faces the IR port 210 of the cellular phone 200. That is, the fit between the slits 130 formed in the IR communication unit 100 and the guide rails 32b formed in the side portion 32 of the first guide member 3 permits the IR emitter/receiver portion 120 to be positioned so as to face and thereby be connected to the IR port 210 of the cellular phone 200 (see Fig. 5). Now, signal transfer is possible between the electronic device (not shown) and the cellular phone 200.

In this way, the IR communication unit 100 and the cellular phone 200, i.e. the communication partner, can be fixed independently to the IR communication unit guide 1, and in addition the IR emitter/receiver portion 120 of the IR communication unit 100 can be positioned so as to face the IR port 210 provided in one side surface of the cellular phone 200, i.e. the communication partner.

Here, the first guide members 2 and 3 constituting the IR communication unit guide I never accidentally operate the operation portion 220 or conceal part of the display portion 230 of the cellular phone 200. Thus, it is possible to perform signal transfer without degrading the operability of the cellular phone 200.

This embodiment deals with a case where the cellular phone 200 has the IR port 210 provided in one side surface thereof. However, even in a case where the cellular phone 200 has the IR port 210 provided in the other, i.e. the opposite, side surface thereof, it is possible to hold the cellular phone 200 in a similar manner by placing it in such a way that the first guide member 3 comes close to that other side surface of the cellular phone 200.

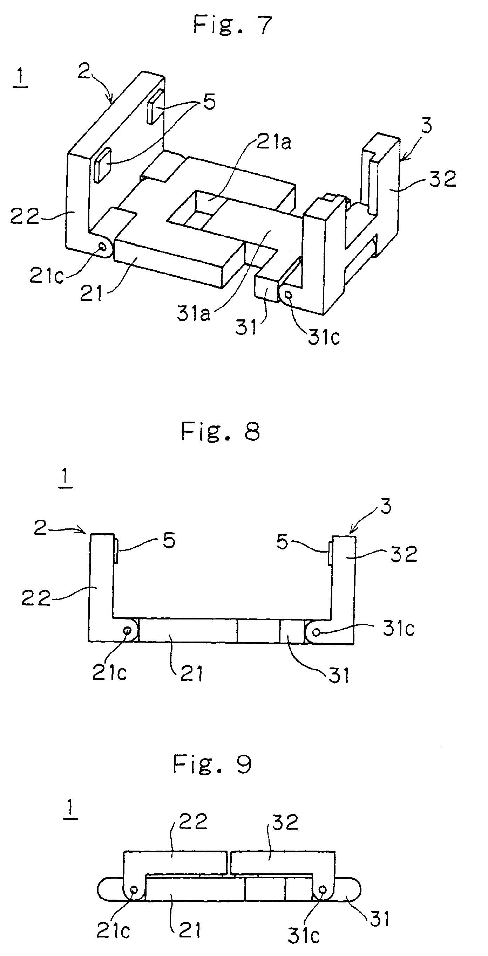

Figs. 7 to 9 show a modified example of the IR communication unit guide 1 described above.

In this IR communication unit guide 1, the side portions 22 and 32 of the first guide members 2 and 3 are pivoted so as to be foldable with respect to the bottom portions 21 and 31. Specifically, the side portion 22 of the first guide member 2 is pivoted on a shaft 21c provided in the bottom portion 21 so that, when the IR communication unit guide 1 is not in use, the side portion 22 is rotated about the shaft 21c so as to be folded down onto the bottom portion 21. Similarly, the side portion 32 of the first guide member 3 is pivoted on a shaft 31c provided in the bottom portion 31 so that, when the IR communication unit guide 1 is not in use, the side portion 32 is rotated about the shaft 31c so as to be folded down onto the bottom portion 31.

Although not illustrated in detail in the figures, stoppers are also provided to permit the side portions 22 and 32 to rotate only in the range from the position in which they are flat on the bottom portions 21 and 31 to the position in which they are upright.

When this IR communication unit guide 1 is adopted, as shown in Fig. 8, with the side portions 22 and 32 unfolded to their upright position, the cellular phone 200 can be held with the IR emitter/receiver portion 120 of the IR communication unit 100 positioned so as to face and thereby be connected to the IR port 210 of the cellular phone 200. On the other hand, when the IR communication unit guide 1 is not used, as shown in Fig. 9, by folding the side portions 22 and 32 down onto the bottom portions 21 and 31, the IR communication unit guide 1 can be made compact so that it requires minimum space when carried around or stored away.

In other respects, the first guide members 2 and 3 of this modified example have the same structure as those described earlier, and therefore their detailed explanations will not be repeated.

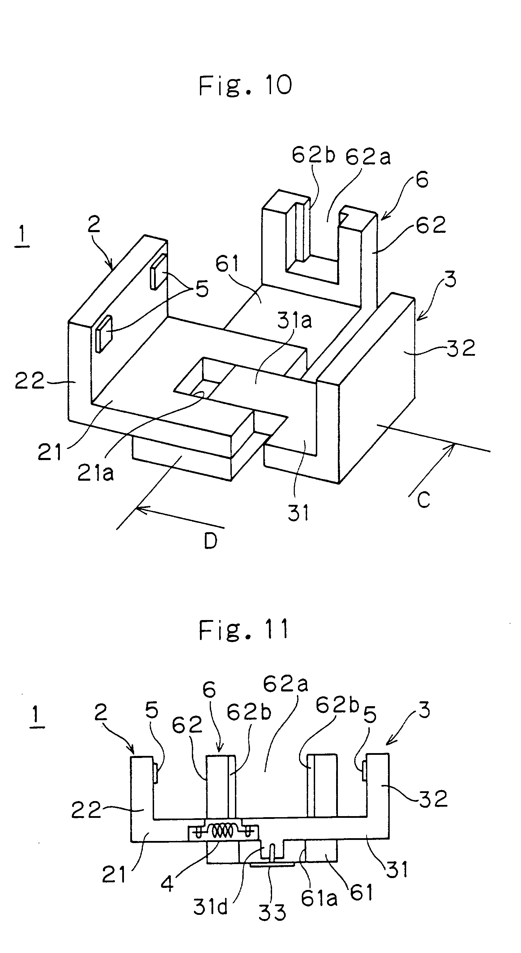

Figs. 10 to 12 show the IR communication unit guide 1 of a second embodiment of the invention.

This IR communication unit guide 1 is designed for use with a cellular phone 200, i.e. a communication partner, that has an IR port 210 provided in the front surface thereof The IR communication unit guide 1 is composed of a pair of first guide members 2 and 3 that can hold the cellular phone 200 by sandwiching it on opposite side surfaces thereof, and a second guide member 6 that is slidable sidewise relative to the first guide members 2 and 3 (i.e. slidable along the resilient member 4).

In the first guide members 2 and 3 here, the side portion 32 of the first guide member 3 has the shape of a flat plate just like the side portion 22 of the first guide member 2, and the bottom portion 31 of the first guide member 3 has a guide 31d formed on the bottom surface thereof so as to be put through a guide hole 61a formed in the second guide member 6 described later. In other respects, the first guide members 2 and 3 here have the same structure as those of the first embodiment describe earlier, and therefore their detailed explanations will not be repeated.

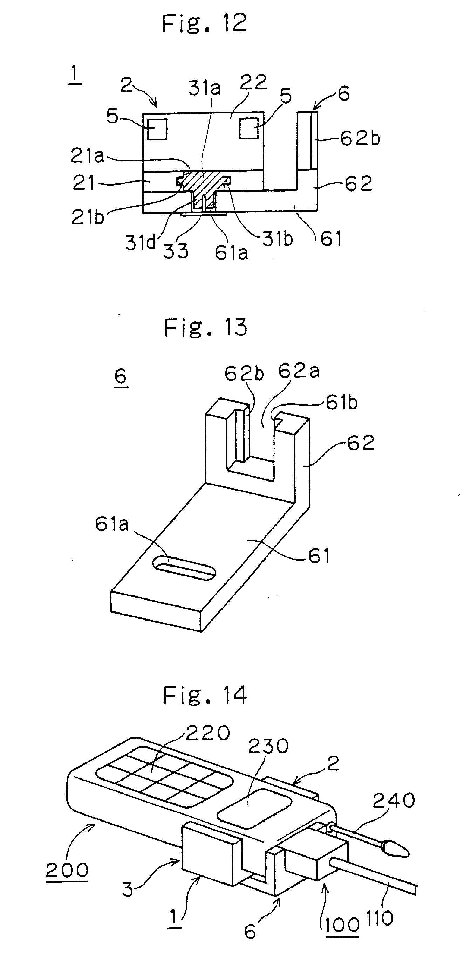

As shown in Fig. 13, the second guide member 6 is composed of a bottom portion 61 and a side portion 62 formed so as to extend upward from the outer edge of the bottom portion 61. In the bottom portion 61, an elongate guide hole 61a is formed parallel to the side portion 62 so as to extend through the bottom portion 61, i.e. from the top to the bottom surface thereof. In the side portion 62, an opening 62a is formed of which the size is equal to or greater than the IR emitter/receiver portion 120 of the IR communication unit 100, and, on opposite inner surfaces along this opening 62a, guide rails 62b are formed vertically that fit in the slits 130 formed in the IR communication unit 100. The height of the opening 62a and the guide rails 62b is so determined that, when the cellular phone 200 is held between the first guide members 2 and 3, the IR port 210 provided in its front surface faces the IR emitter/receiver portion 120 of the IR communication unit 100.

When the guide 31d formed on the bottom portion 31 of the first guide member 3 is put through the guide hole 61a of the second guide member 6, a stopper screw 33 having a head larger than the width of the guide 31d is fixed on the guide 31d to prevent the second guide member 6 from dropping out.

Next, how, using this IR communication unit guide 1, the IR communication unit 100 and the cellular phone 200, i.e. the communication partner, are positioned relative to each other so as to be connected together so that signal transfer is possible will be described.

First, with the first guide member 2 held firmly, the first guide member 3 is pulled outward against the force exerted by the resilient member 4 so that their side portions 22 and 32 are held wider apart, and then the cellular phone 200 is placed between the side portions 22 and 32. Here, the position in which the cellular phone 200 is held between the side portions 22 and 32 is adjusted so that the side portion 62 of the second guide member 6 comes close to the front surface of the cellular phone 200. Then, the first guide members 2 and 3 are set free, so that, under the force exerted by the resilient member 4, the cellular phone 200 is, on the side surfaces thereof, held between the side portions 22 and 32 of the first guide members 2 and 3, and the antislip rubber pads 5 provided on the inner surfaces of the side portions 22 and 32 keep the cellular phone 200 in position. Then, the second guide member 6 is slid sidewise along the guide 31d so that the opening 62a formed in the side portion 62 of the second guide member 6 faces the IR port 210 of the cellular phone 200.

Next, the slits 130 formed in the left and right side surfaces of the IR communication unit 100 are brought right above the guide rails 62b formed in the side portion 62 of the second guide member 6, and then the IR communication unit 100 is brought down so as to be set in the opening 62a so that the slits 130 of the IR communication unit 100 fit on the guide rails 62b formed in the side portion 62 of the second guide member 6, with the result that the IR emitter/receiver portion 120 of the IR communication unit 100 is positioned so as to face and thereby be connected to the IR port 210 of the cellular phone 200 (see Fig. 14). Now, signal transfer is possible between the electronic device (not shown) and the cellular phone 200.

In this way, the IR communication unit 100 and the cellular phone 200, i.e. the communication partner, can be fixed independently to the IR communication unit guide 1, and in addition the IR emitter/receiver portion 120 of the IR communication unit 100 can be positioned so as to face the IR port 210 provided in the front surface of the cellular phone 200, i.e. the communication partner.

Here, the first guide members 2 and 3 and the second guide member 6 constituting the IR communication unit guide 1 never accidentally operate the operation portion 220 or conceal part of the display portion 230 of the cellular phone 200. Thus, it is possible to perform signal transfer without degrading the operability of the cellular phone 200.

In a case where the cellular phone 200 has the IR port 210 provided in the rear surface thereof, it is possible to hold the cellular phone 200 in a similar manner by placing it in such a way that the second guide member 6 comes close to the rear surface of the cellular phone 200.

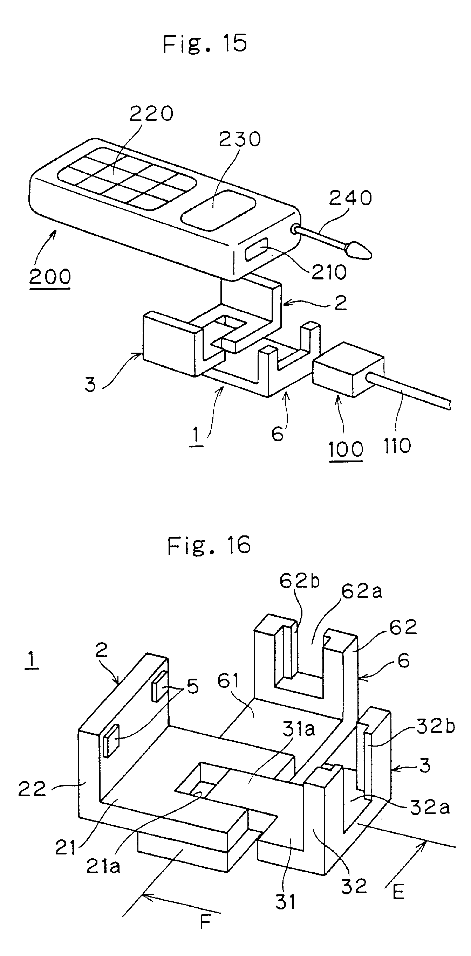

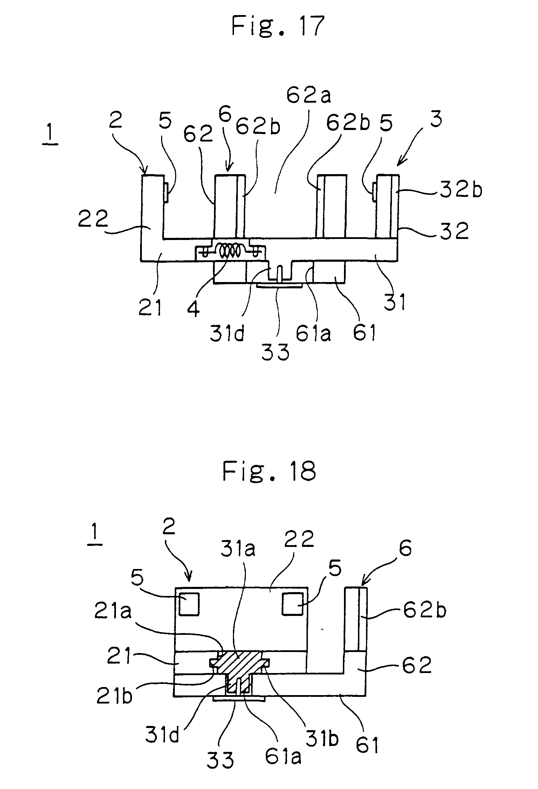

Figs. 16 to 18 show the IR communication unit guide 1 of a third embodiment of the invention.

This IR communication unit guide 1 is designed for use with a cellular phone 200, i.e. a communication partner, that is provided with two IR ports 210, one in one side surface and the other in the front surface thereof. The IR communication unit guide 1 is composed of a pair of first guide members 2 and 3 that can hold the cellular phone 200 by sandwiching it on opposite side surfaces thereof, and a second guide member 6 that is slidable sidewise relative to the first guide members 2 and 3 (i.e. slidable along the resilient member 4).

In the first guide members 2 and 3 here, the bottom portion 31 of the first guide member 3 has a guide 31d formed on the bottom surface thereof so as to be put through a guide hole 61a formed in the second guide member 6 described later. In other respects, the first guide members 2 and 3 here have the same structure as those of the first embodiment describe earlier, and therefore their detailed explanations will not be repeated.

The second guide member 6 has the same structure as that of the second embodiment described above, and therefore its detailed explanations will not be repeated.

As in the second embodiment, when the guide 31d formed on the bottom portion 31 of the first guide member 3 is put through the guide hole 61a of the second guide member 6, a stopper screw 33 having a head larger than the width of the guide 3 Id is fixed on the guide 3 Id to prevent the second guide member 6 from dropping out.

Next, how, using this IR communication unit guide 1, the IR communication unit 100 and the cellular phone 200, i.e. the communication partner, are positioned relative to each other so as to be connected together so that signal transfer is possible will be described.

When the IR port 210 provided in one side surface of the cellular phone 200 is used, first, with the first guide member 2 held firmly, the first guide member 3 is pulled outward against the force exerted by the resilient member 4 so that their side portions 22 and 32 are held wider apart, and then the cellular phone 200 is placed between the side portions 22 and 32. Here, the position of the cellular phone 200 is so adjusted that the opening 32a formed in the side portion 32 of the first guide member 3 faces the IR port 210 provided in one side surface of the cellular phone 200. Then, the first guide members 2 and 3 are set free, so that, under the force exerted by the resilient member 4, the cellular phone 200 is, on the side surfaces thereof, held between the side portions 22 and 32 of the first guide members 2 and 3, and the antislip rubber pads 5 keep the cellular phone 200 in position.

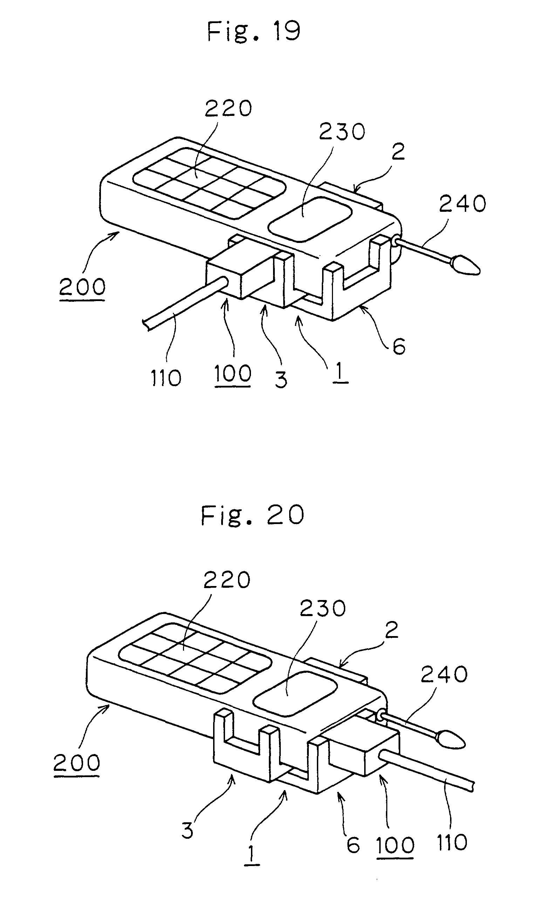

Next, the slits 130 formed in the left and right side surfaces of the IR communication unit 100 are brought right above the guide rails 32b formed in the side portion 32 of the first guide member 3, and then the IR communication unit 100 is brought down so as to be set in the opening 32a so that the slits 130 of the IR communication unit 100 fit on the guide rails 32b formed in the side portion 32 of the first guide member 3, with the result that the IR emitter/receiver portion 120 of the IR communication unit 100 is positioned so as to face and thereby be connected to the IR port 210 of the cellular phone 200 (see Fig. 19). Now, signal transfer is possible between the electronic device (not shown) and the cellular phone 200.

On the other hand, when the IR port 210 provided in the front surface of the cellular phone 200 is used, similarly, the cellular phone 200 is placed between the side portions 22 and 32 of the first guide members 2 and 3 so that, under the force exerted by the resilient member 4, the cellular phone 200 is, on the side surfaces thereof, held between the side portions 22 and 32 of the first guide members 2 and 3. Moreover, the second guide member 6 is slid sidewise along the guide 31d so that the opening 62a formed in the side portion 62 of the second guide member 6 faces the IR port 210 of the cellular phone 200.

Next, the slits 130 formed in the left and right side surfaces of the IR communication unit 100 are brought right above the guide rails 62b formed in the side portion 62 of the second guide member 6, and then the IR communication unit 100 is brought down so as to be set in the opening 62a so that the slits 130 of the IR communication unit 100 fit on the guide rails 62b formed in the side portion 62 of the second guide member 6, with the result that the IR emitter/receiver portion 120 of the IR communication unit 100 is positioned so as to face and thereby be connected to the IR port 210 of the cellular phone 200 (see Fig. 20). Now, signal transfer is possible between the electronic device (not shown) and the cellular phone 200.

In this way, the IR communication unit 100 and the cellular phone 200, i.e. the communication partner, can be fixed independently to the IR communication unit guide 1, and in addition, even in a case where the cellular phone 200, i.e. the communication partner, has IR ports 210 provided in two adjacent surfaces thereof, the IR emitter/receiver portion 120 of the IR communication unit 100 can be positioned so as to face selectively one of the IR ports 210 of the cellular phone 200, i.e. the communication partner.

Here, the first guide members 2 and 3 and the second guide member 6 constituting the IR communication unit guide 1 never accidentally operate the operation portion 220 or conceal part of the display portion 230 of the cellular phone 200. Thus, it is possible to perform signal transfer without degrading the operability of the cellular phone 200.

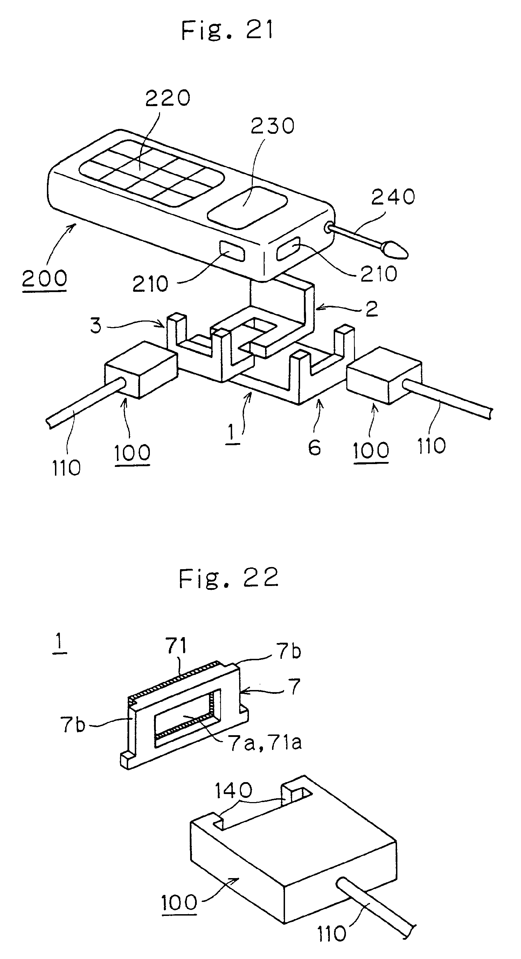

Fig. 22 shows the IR communication unit guide 1 of a fourth embodiment of the invention.

This IR communication unit guide I is of a type that is detachably attached, by adhesion, directly around an IR port 210 provided in a cellular phone 200, i.e. a communication partner. The IR communication unit guide 1 is composed of a plate-shaped guide member 7 and an adhesive cushion member 71 bonded to the front surface of the guide member 7. The guide member 7 has an opening 7a formed therein of which the size is equal to or greater than the IR port 210 of the cellular phone 200, and has guide rails 7b formed along the left and right edges thereof

The cushion member 71 also has an opening 71a formed therein that corresponds to the opening 7a of the guide member 7, and is bonded to all around the front surface of the guide member 7.

On the other hand, an IR communication unit 100 has an IR emitter/receiver portion 120 provided in the front surface thereof, and has hook-shaped fitting claws 140 formed along the left and right edges thereof so as to fit on the aforementioned guide rails 7b of the guide member 7.

Next, how, using this IR communication unit guide 1, the IR communication unit 100 and the cellular phone 200, i.e. the communication partner, are positioned relative to each other so as to be connected together so that signal transfer is possible will be described.

First, with the IR communication unit guide 1 held, the cushion member 71 thereof is attached, by adhesion, around the IR port 210 provided in one side surface of the cellular phone 200. That is, the cushion member 71 is attached, by adhesion, to one side surface of the cellular phone 200 in such a way that the opening 71a of the cushion member 71 and the opening 7a of the guide member 7 face the IR port 210 of the cellular phone 200. Here, even if the side surface of the cellular phone 200 is curved, the cushion member 71 follows the curve, making its attachment easy.

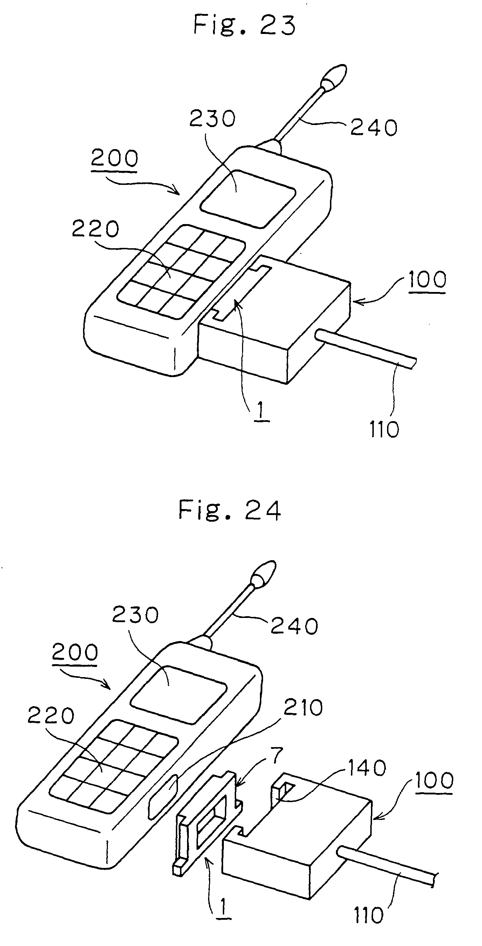

Next, with the IR communication unit 100 held, the fitting claws 140 formed on the front surface thereof are brought down along the guide rails 7b formed on the guide member 7 so that the fitting claws 140 of the IR communication unit 100 are fit on the guide rails 7b of the guide member 7, with the result that the IR emitter/receiver portion 120 of the IR communication unit 100 is positioned so as to face and thereby be connected to the IR port 210 of the cellular phone 200 (see Fig. 23). Now, signal transfer is possible between the electronic device (not shown) and the cellular phone 200.

In this way, by adhesion-attaching the IR communication unit guide 1 to the cellular phone 200, i.e. the communication partner, and then fixing the IR communication unit 100 to the IR communication unit guide 1, the IR communication unit 100 can be fixed, through the IR communication unit guide 1, to the cellular phone 200, i.e. the communication partner, and in addition the IR emitter/receiver portion 120 of the IR communication unit 100 can be positioned so as to face the IR port 210 provided in one side surface of the cellular phone 200, i.e. the communication partner.

Here, the IR communication unit guide 1, simply adhesion-attached to one side surface of the cellular phone 200 in which the IR port 210 is provided, never accidentally operates the operation portion 220 or conceals part of the display portion 230 of the cellular phone 200. Thus, it is possible to perform signal transfer without degrading the operability of the cellular phone 200.

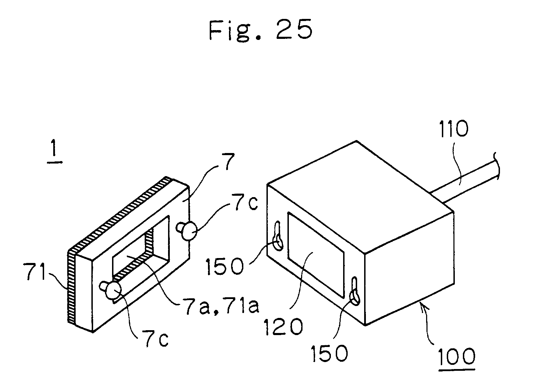

Fig. 25 shows the IR communication unit guide 1 of a fifth embodiment of the invention.

The IR communication unit guide 1 also is composed of a plate-shaped guide member 7 having an opening 7a formed therein of which the size is equal to or greater than the IR port 210 of the cellular phone 200 and an adhesive cushion member 71 bonded to the front surface of the guide member 7 and having an opening 71a formed therein that corresponds to the opening 7a of the guide member 7. The guide member 7 further has engagement projections 7c formed on the rear surface thereof, near the left and right edges thereof.

On the other hand, an IR communication unit 100 has an IR emitter/receiver portion 120 provided in the front surface thereof, and has keyhole-shaped engagement holes 150 formed near the left and right edges thereof so as to correspond to the aforementioned engagement projections 7c of the guide member 7.

Next, how, using this IR communication unit guide 1, the IR communication unit 100 and the cellular phone 200, i.e. the communication partner, are positioned relative to each other so as to be connected together so that signal transfer is possible will be described.

First, with the IR communication unit guide 1 held, the cushion member 71 thereof is attached, by adhesion, around the IR port 210 provided in one side surface of the cellular phone 200. That is, the cushion member 71 is attached, by adhesion, to one side surface of the cellular phone 200 in such a way that the opening 71a of the cushion member 71 and the opening 7a of the guide member 7 face the IR port 210 of the cellular phone 200. Here, even if the side surface of the cellular phone 200 is curved, the cushion member 71 follows the curve, making its attachment easy.

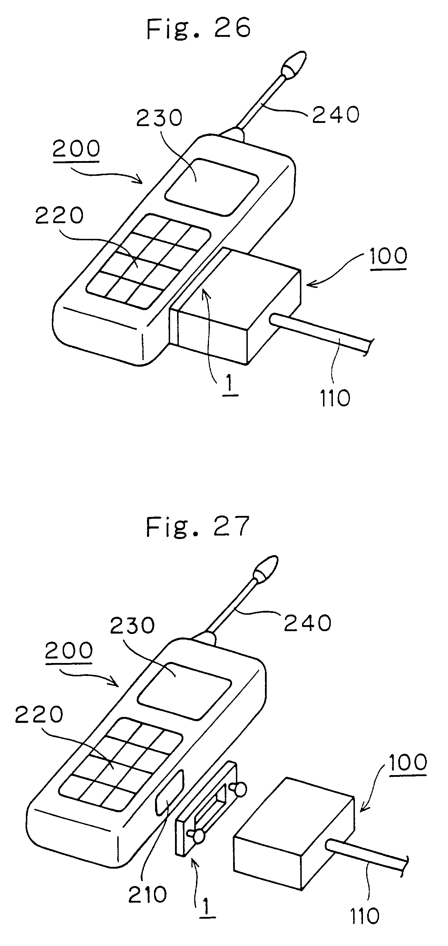

Next, with the IR communication unit 100 held, the engagement holes 150 formed in the front surface thereof are brought in front of and then put around the engagement projections 7c formed on the guide member 7, and then the IR communication unit 100 is brought down. This causes the engagement projections 7c of the guide member 7 to fit into the engagement holes 150 of the IR communication unit guide 1 and thereby makes them integral, with the result that the IR emitter/receiver portion 120 of the IR communication unit 100 is positioned so as to face and thereby be connected to the IR port 210 of the cellular phone 200 (see Fig. 26). Now, signal transfer is possible between the electronic device (not shown) and the cellular phone 200.

In this way, by adhesion-attaching the IR communication unit guide 1 to the cellular phone 200, i.e. the communication partner, and then fixing the IR communication unit 100 to the IR communication unit guide 1, the IR communication unit 100 can be fixed, through the IR communication unit guide 1, to the cellular phone 200, i.e. the communication partner, and in addition the IR emitter/receiver portion 120 of the IR communication unit 100 can be positioned so as to face the IR port 210 provided in one side surface of the cellular phone 200, i.e. the communication partner.

Here, the IR communication unit guide 1, simply adhesion-attached to one side surface of the cellular phone 200 in which the IR port 210 is provided, never accidentally operates the operation portion 220 or conceals part of the display portion 230 of the cellular phone 200. Thus, it is possible to perform signal transfer without degrading the operability of the cellular phone 200.

All the embodiments described hereinbefore deal with cases in which a cellular phone 200 is used as a communication partner electronic device. However, it is to be understood that the present invention is applicable not only to cellular phones 200 but also to any electronic devices capable of data communication. For example, the present invention is applicable to electronic devices such as computers and their peripheral devices and terminal units, in which case the sizes of the first guide members 2 and 3 and the second guide member 6 are determined to suit the sizes of specific given electronic devices.

As described above, according to the present invention, an IR communication unit that is connected via a cable to one electronic device can be positioned so as to face and thereby be connected to an IR port provided in another electronic device, i.e. a communication partner. Moreover, this is achieved without accidentally operating the operation portion or concealing part of the display portion of the communication partner during signal transfer between the two electronic devices; that is, signal transfer can be performed without degrading the operability of the communication partner.

## Claims

1. An IR communication unit guide (1) that permits an IR communication unit (100) connected via a cable to a first electronic device to be positioned in such a way that an IR emitter/receiver portion (120) of the IR communication unit faces and is thereby connected to an IR port (210) provided in a surface of a second electronic device (200) acting as a communication partner, comprising:
a pair of first guide members (2, 3) that can hold the second electronic device (200) by sandwiching the second electronic device, one (3) of the first guide members having an opening (32a) formed therein and having a positioning portion (32b), for positioning the IR communication unit (100), formed thereon,
wherein the second electronic device (200) is held by being sandwiched between the pair of first guide members (2, 3) with the IR port (210) of the second electronic device facing the opening (32a) of said one (3) of the first guide members, and the IR communication unit (100) is connected to the positioning portion (32b) of said one of the first guide members.

2. An IR communication unit guide (1) as claimed in claim 1,
wherein the first guide members (2, 3) each comprise a bottom portion (21, 31) and a side portion (22, 32) pivotably fitted on the bottom portion so that, when the IR communication unit guide (1) is not in use, the side portion is folded down onto the bottom portion.

3. An IR communication unit guide (1) that permits an IR communication unit (100) connected via a cable to a first electronic device to be positioned in such a way that an IR emitter/receiver portion (120) of the IR communication unit faces and is thereby connected to an IR port (210) provided in a surface of a second electronic device (200) acting as a communication partner, comprising:
a pair of first guide members (2, 3) that can hold the second electronic device (200) by sandwiching the second electronic device; and
a second guide member (6) that is slidable in a direction in which the pair of first members (2, 3) are slidable to sandwich the second electronic device (200), the second guide member having an opening (62a) formed therein and having a positioning portion (62b), for positioning the IR communication unit (100), formed thereon,
wherein the second electronic device (200) is held by being sandwiched between the pair of first guide members (2, 3) with the IR port (210) of the second electronic device facing the opening (62a) of the second guide member (6), and the IR communication unit (100) is connected to the positioning portion (62b) of the second guide member.

4. An IR communication unit guide (1) that permits an IR communication unit (100) connected via a cable to a first electronic device to be positioned in such a way that an IR emitter/receiver portion (120) of the IR communication unit faces and is thereby connected selectively to one of IR port (210)s provided individually in two adjacent surfaces of a second electronic device (200) acting as a communication partner, comprising:
a pair of first guide members (2, 3) that can hold the second electronic device (200) by sandwiching the second electronic device, one (3) of the first guide members having an opening (32a) formed therein and having a positioning portion (32b), for positioning the IR communication unit (100), formed thereon; and
a second guide member (6) that is slidable in a direction in which the pair of first members (2, 3) are slidable to sandwich the second electronic device (200), the second guide member having an opening (62a) formed therein and having a positioning portion (62b), for positioning the IR communication unit (100), formed thereon,
wherein the second electronic device (200) is held by being sandwiched between the pair of first guide members (2, 3) with one of the IR port (210)s of the second electronic device facing the opening (32a) of said one (3) of the first guide members or the opening (62a) of the second guide member (6), and the IR communication unit (100) is connected selectively to the positioning portion (32b) of said one of the first guide member or the positioning portion (62b) of the second guide member.

5. An IR communication unit guide (1) that permits an IR communication unit (100) connected via a cable to a first electronic device to be positioned in such a way that an IR emitter/receiver portion (120) of the IR communication unit faces and is thereby connected to an IR port (210) provided in a surface of a second electronic device (200) acting as a communication partner, comprising:
a guide member (7) having an opening (7a), whose size is equal to or larger than the IR port (210) of the second electronic device (200), formed therein and having a positioning portion (7b, 7c), for positioning the IR communication unit (100), formed thereon; and
an adhesive cushion member (71) bonded to the guide member (7),
wherein the guide member (7) is adhesion-attached, through the adhesive cushion member (71), to the second electronic device (200) with the opening (7a) of the guide member facing the IR port (210) of the second electronic device, and the IR communication unit (100) is connected to the positioning portion (7b, 7c) of the guide member.
